# EUROPEAN PATENT APPLICATION

(11) **EP 3 053 766 A1**
(43) Date of publication of application: **10.08.2016**
(21) Application number: 16154280.8
(22) Date of filing: 04.02.2016
(51) Int. Cl.: B60H 1/32, B60H 1/00, F25B 27/02, F25D 21/14, F25B 13/00

(54) **SUB-ENGINE TYPE TRANSPORTATION REFRIGERATION UNIT**

(30) Priority: 06.02.2015 JP 2015022183
(71) Applicant: Mitsubishi Heavy Industries, Ltd., Tokyo 108-8215 (JP)
(72) Inventor: Hokazono, Toshiyuki, Tokyo, 108-8215 (JP)
(74) Representative: Henkel, Breuer & Partner

(57) **Abstract**

An object is to simply prevent refreezing of drain water during defrost operation by utilizing an existing device. A sub-engine type transportation refrigeration unit includes: a unit body (2) partitioned into a refrigeration chamber (4) located at an upper part and an engine chamber (5) located at a lower part by a partition plate (3); a sub engine (16) for refrigeration unit drive disposed in the engine chamber (5); and an outside constituent device of a heat pump type refrigeration unit (7) disposed in the refrigeration chamber (4), wherein a drain pan (6) that receives drain water which drops from an outdoor heat exchanger (10) of the refrigeration unit (7) is configured by the partition plate (3), and an engine auxiliary machine (20) that discharges exhaust heat of the sub engine (16) is disposed along a lower surface of the drain pan (6).

## Description

### {Technical Field}

The present invention relates to a sub-engine type transportation refrigeration unit mounted with an engine for exclusive use for driving a refrigeration unit (referred to as a sub engine).

### {Background Art}

As a transportation refrigeration unit mounted in a trailer and a refrigeration vehicle for maintaining a cargo loaded in a cooling box at a predetermined temperature to transport the cargo, there are a direct connecting type transportation refrigeration unit in which a compressor and the like of the refrigeration unit are driven by an engine for travel of a vehicle, and a sub-engine type transportation refrigeration unit in which a sub engine for exclusive use for driving a refrigeration unit such as a compressor and the like is mounted. As an example of the sub-engine type transportation refrigeration unit transportation refrigeration unit, a sub-engine type transportation refrigeration unit, in which the inside of a unit body is partitioned into two upper and lower chambers by a partition plate, the upper chamber is used as a refrigeration chamber, an outside constituent device of a refrigeration unit is disposed in the upper chamber, the lower chamber is used as an engine chamber, and a sub engine and an auxiliary machine (peripheral device) of the sub engine are disposed in the engine chamber, is known.

Additionally, as the transportation refrigeration unit, a refrigeration unit that has not only a cooling function, but also a warming function in order to maintaining a cargo at a predetermined temperature to transport the cargo is conventionally known. For obtaining this warming function, a hot gas bypass system by bypassing hot gas refrigerant discharged from a compressor to an evaporator to warm the cargo is conventionally general, but a refrigeration unit using a heat pump system that is widely applied as a system for enabling a heating function of an air conditioner is recently provided from an aspect of warming capability or efficiency.

On the other hand, in the field of the air conditioner, heating conventionally depends on a heat pump system. In a case of the heat pump system, it is known that frost is formed on an outdoor heat exchanger that functions as an evaporator during heating at a low outside air temperature. In a case where frost formation is detected, a cycle is switched into a cooling cycle and defrost operation is performed each time when the frost formation is detected, thereby melting the frost. Then, during the defrost operation, a measure, for example, attachment of a defrost heater to a drain pan, is taken such that drain water generated by the melting of the frost does not refreeze on the drain pan.

As an engine driven heat pump air conditioner (GHP), for example, a heat pump air conditioner has system where the inside of a unit body is partitioned into two upper and lower chambers, an upper chamber is used as an outdoor unit chamber, a lower chamber is used as an engine chamber, outdoor devices such as an outdoor heat exchanger and an outdoor fan are disposed in the outdoor unit chamber located at the upper part, and a gas engine, an auxiliary machine of the gas engine, and devices such as a compressor driven by the gas engine are disposed in the engine chamber located at the lower part, a heat conductive sound absorbing material is adhered onto a lower surface of a partition plate serving as a drain pan, a mounting fitting of the sound absorbing material is integrally provided with a heat transfer fin, and the drain pan is warmed by exhaust heat of the engine, so that the drain water is prevented from refreezing on the drain pan, as shown in each of PTLs 1 and 2. And a heat pump air conditioner has a sound insulation wall which is removed at a part facing an outdoor heat exchanger, and the removed part is covered with a plate material having excellent thermal conductivity, as shown in PTL 3.

### {Citation List}

### {Patent Literature}

{PTL 1} Japanese Unexamined Utility Model Application, Publication No. Sho63-14924
{PTL 2} Japanese Unexamined Utility Model Application, Publication No. Sho63-14925
{PTL 3} Japanese Unexamined Utility Model Application, Publication No. Sho62-60820

### {Summary of Invention}

### {Technical Problem}

As described above, in the sub-engine type transportation refrigeration unit, in which the outdoor devices of the heat pump type refrigeration unit are disposed in the refrigeration chamber located at the upper part of the unit body, and the sub engine that drives the heat pump type refrigeration unit is disposed in the engine chamber located at the lower part, frost is formed on an outdoor heat exchanger that functions as an evaporator, during heat pump warming operation at a low outside air temperature, and defrost operation for melting the frost is performed, so that drain water is generated. There is a problem that in a case where this drain water drops on the drain pan or the peripheral components at a nearly freezing point, the drain water refreezes to have a harmful effect on the peripheral components, the drain water cannot be discharged, or the like.

In order to prevent the refreezing of the drain water, the measures, such as warming of the drain pan by the utilization of the engine, for example, by attaching the defrost heater to the drain pan, providing the heat conductive sound absorbing material and the heat transfer fin on the lower surface of the drain pan, or removing a part of the sound insulation wall and covering the removed part with the plate material having excellent thermal conductivity, as described above, are taken. However, a special antifreezing mechanism needs to be added, which causes complication of the configuration and increase in cost. Therefore, such an improvement plan that refreezing of drain water can be simply and reliably prevented without adding the special antifreezing mechanism is requested.

The present invention has been made in view of the above circumstances, and an object of the invention is to provide a sub-engine type transportation refrigeration unit employing a heat pump warming system capable of simply preventing refreezing of drain water during defrost operation by utilizing an existing device without adding a special antifreezing mechanism.

### {Solution to Problem}

In order to solve the above problem, a sub-engine type transportation refrigeration unit of the present invention employs the following solutions.

A sub-engine type transportation refrigeration unit according to the present invention includes: a unit body that is partitioned into a refrigeration chamber located at an upper part and an engine chamber located at a lower part by a partition plate; a sub engine for drive of a heat pump type refrigeration unit, disposed in the engine chamber; and an outside constituent device of the heat pump type refrigeration unit disposed in the refrigeration chamber, wherein a drain pan that receives drain water which drops from an outdoor heat exchanger of the heat pump type refrigeration unit is configured by using the partition plate, and an engine auxiliary machine that discharges combustion exhaust heat of the sub engine is disposed along a lower surface of the drain pan.

According to this configuration, the sub engine is disposed in the engine chamber located at the lower part of the unit body partitioned by the partition plate, the outside constituent device of the heat pump type refrigeration unit is disposed in the refrigeration chamber located at the upper part, the drain pan is configured by using the partition plate, and the engine auxiliary machine that discharges combustion exhaust heat of the sub engine is disposed along the lower surface of the drain pan. Therefore, even when frost is formed on the outdoor heat exchanger that functions as an evaporator, during heat pump warming operation at a low outside air temperature, and defrost operation for melting the frost is performed, so that drain water is generated, the drain pan configured by using the partition plate can be efficiently warmed by heat radiated from the engine auxiliary machine that is disposed along the lower surface and discharges combustion exhaust heat of the sub engine. As a result, it is possible to prevent the refreezing of the drain water that drops on the drain pan from the outdoor heat exchanger, and promptly discharge the drain water to the outside of the unit discharge. Therefore, it is possible to simply prevent the refreezing of the drain water during the defrost operation just by devising placement of the existing engine auxiliary machine, without adding a special antifreezing mechanism, and it is possible to simplify the configuration of the transportation refrigeration unit employing a heat pump system, and reduce the cost of the sub-engine type transportation refrigeration unit.

In the above invention, the engine auxiliary machine is one of a cooling water system constituent device and an exhaust gas system constituent device of the sub engine, or both the cooling water system constituent device and the exhaust gas system constituent device.

According to this configuration, the engine auxiliary machine is one of the cooling water system constituent device and the exhaust gas system constituent device of the sub engine, or both the cooling water system constituent device and the exhaust gas system constituent device, and therefore even in a case where either the cooling water system constituent device or the exhaust gas system constituent device which is an existing auxiliary machine included in the sub engine is disposed along the drain pan, the drain pan can be sufficiently warmed to at least a temperature at which the refreezing of drain water can be prevented, by utilizing cooling water which reaches a temperature of around 90°C, or exhaust heat of exhaust gas which reaches a temperature of 350 to 400°C. Accordingly, it is possible to solve one of the problems in the heat pump type transportation refrigeration unit, namely the refreezing problem of drain water during defrost operation.

In the above invention, the cooling water system constituent device has a cooling water pipe and/or a radiator.

According to this configuration, the cooling water pipe and/or the radiator that circulates and cools cooling water of the sub engine is disposed along the lower surface of the drain pan, so that the drain pan can be reliably warmed to a temperature not lower than the temperature at which the refreezing of drain water is prevented, by utilizing heat radiated from the cooling water pipe and/or the radiator. Therefore, the existing cooling water pipe and/or radiator that are the cooling water system constituent devices of the sub engine are simply disposed along the lower surface of the drain pan, so that it is possible to easily solve the refreezing problem of drain water during defrost operation.

In the above invention, the cooling water system constituent device disposed along the lower surface of the drain pan has a cooling water pipe, and a radiator connected to the cooling water pipe is disposed on a side of the refrigeration chamber together with the outdoor heat exchanger.

According to this configuration, the cooling water system constituent device disposed along the lower surface of the drain pan has the cooling water pipe, and the radiator connected to the cooling water pipe is disposed on the side of the refrigeration chamber together with the outdoor heat exchanger, and therefore the drain pan can be warmed by the existing cooling water pipe that circulates the cooling water of the sub engine to the radiator. The radiator is disposed on the refrigeration chamber side together with the outdoor heat exchanger, and the cooling water can be cooled by allowing outside air to forcibly pass through a fan and the like. Therefore, it is possible to solve the refreezing problem of drain water during defrost operation.

In the above invention, the exhaust gas system constituent device has an exhaust gas pipe and/or a muffler.

According to this configuration, the exhaust gas system constituent device has the exhaust gas pipe and/or the muffler, and therefore the exhaust gas pipe and/or the muffler that discharge exhaust gas of the sub engine, which reaches a high temperature of 350 to 400°C, are disposed along the lower surface of the drain pan, so that the drain pan can be reliably warmed to a temperature not lower than the temperature at which the refreezing of drain water is prevented, by utilizing heat radiated from the exhaust gas pipe and/or the muffler. Therefore, the existing exhaust gas pipe and/or muffler that are the exhaust gas system constituent devices of the sub engine are disposed along the lower surface of the drain pan, so that it is possible to easily solve the refreezing problem of drain water during defrost operation.

In the above invention, the engine auxiliary machine is disposed close to the lower surface of the drain pan within 10 cm.

According to this configuration, the engine auxiliary machine is disposed close to the lower surface of the drain pan within 10 cm, and therefore the cooling water of the sub engine reaches around 90°C, and the exhaust gas reaches 350 to 400°C. Therefore, the engine auxiliary machines such as the cooling water system constituent device and the exhaust gas system constituent device do not always need to be disposed in contact with the lower surface of the drain pan, and are disposed close to the lower surface of the drain pan within 10 cm, so that the drain pan can be sufficiently warmed to a temperature not lower than the temperature at which the refreezing of drain water is prevented, by utilizing the radiant heat. Accordingly, it is possible to sufficiently ensure a degree of freedom when the cooling water system constituent device, the exhaust gas system constituent device or the like is disposed along the lower surface of the drain pan.

### {Advantageous Effects of Invention}

According to the present invention, even when frost is formed on the outdoor heat exchanger that functions as an evaporator, during heat pump warming operation under a low outside air temperature, and drain water is generated by performing defrost operation for melting the frost, the drain pan configured by using the partition plate can be efficiently warmed by heat radiated from the engine auxiliary machine which discharges combustion exhaust heat of the sub engine disposed along the lower surface. As a result, it is possible to prevent the refreezing of the drain water that drops on the drain pan from the outdoor heat exchanger, and promptly discharge the drain water to the outside of the unit, and therefore it is possible to simply prevent the refreezing of the drain water during the defrost operation just by devising placement of the existing engine auxiliary machine, without adding a special antifreezing mechanism, and it is possible to simplify the configuration of a transportation refrigeration unit employing a heat pump system, and reduce the cost of the sub-engine type transportation refrigeration unit.

### {Brief Description of Drawings}

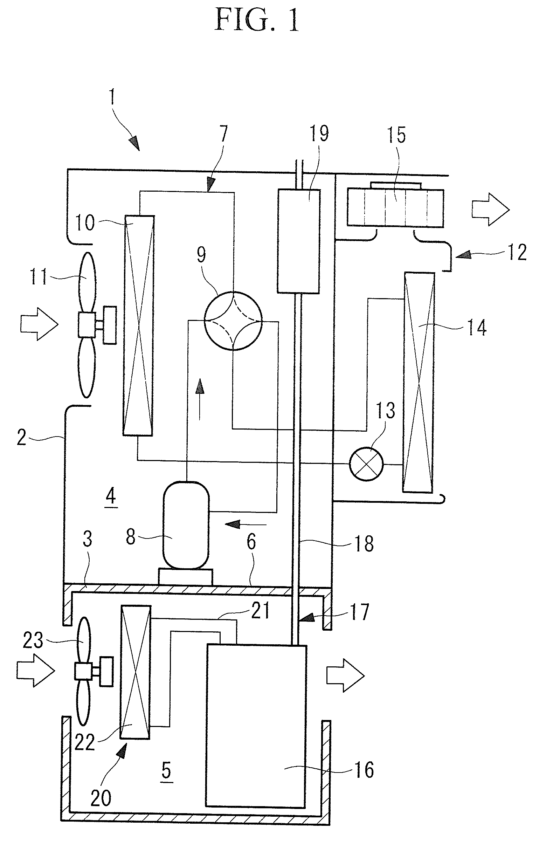

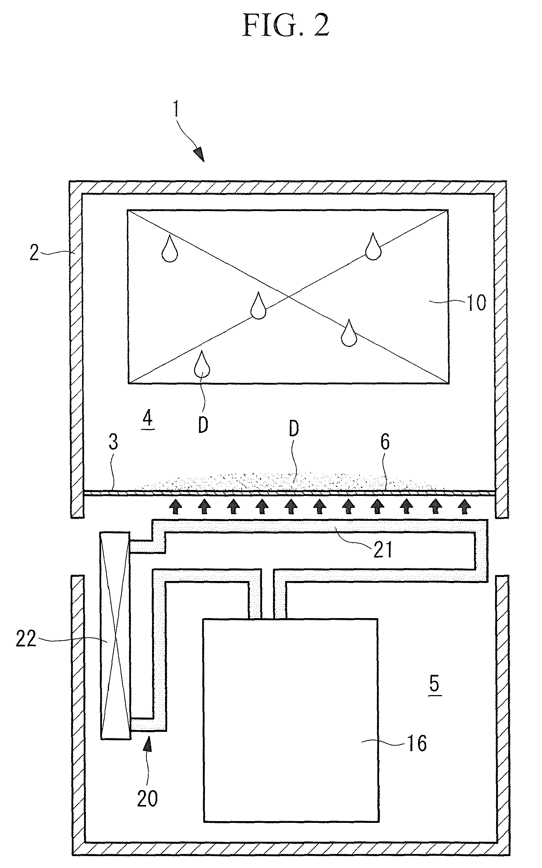

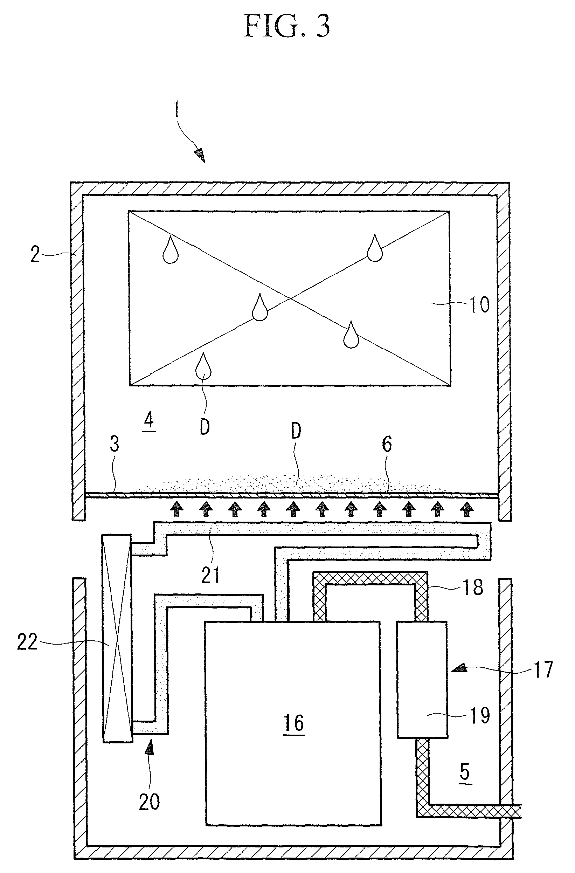

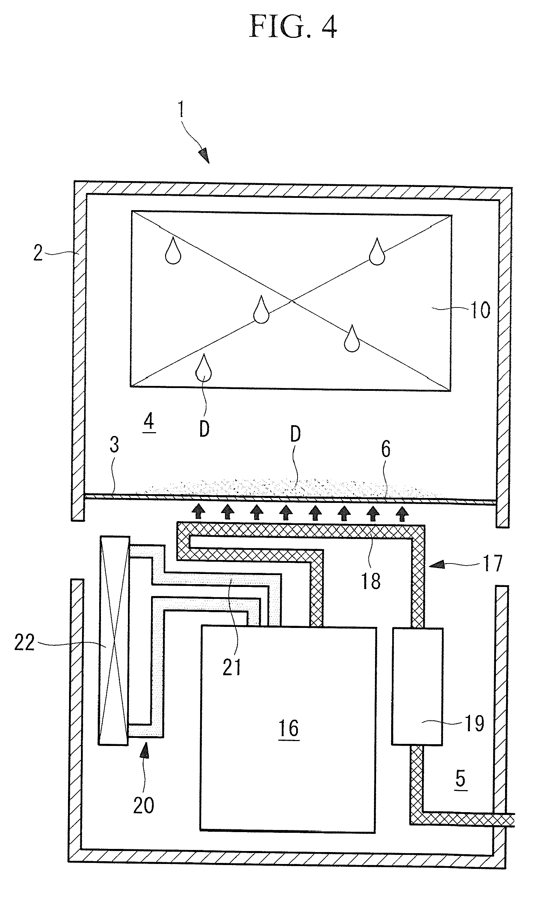

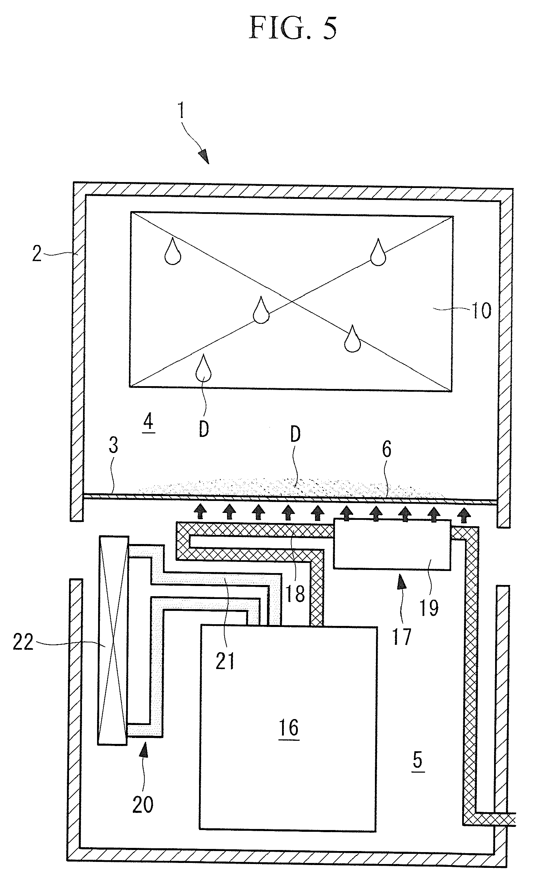

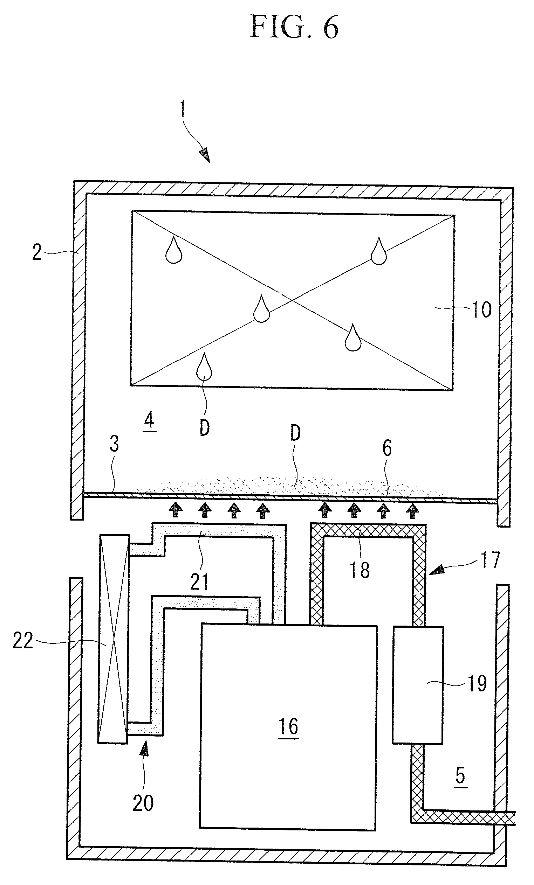

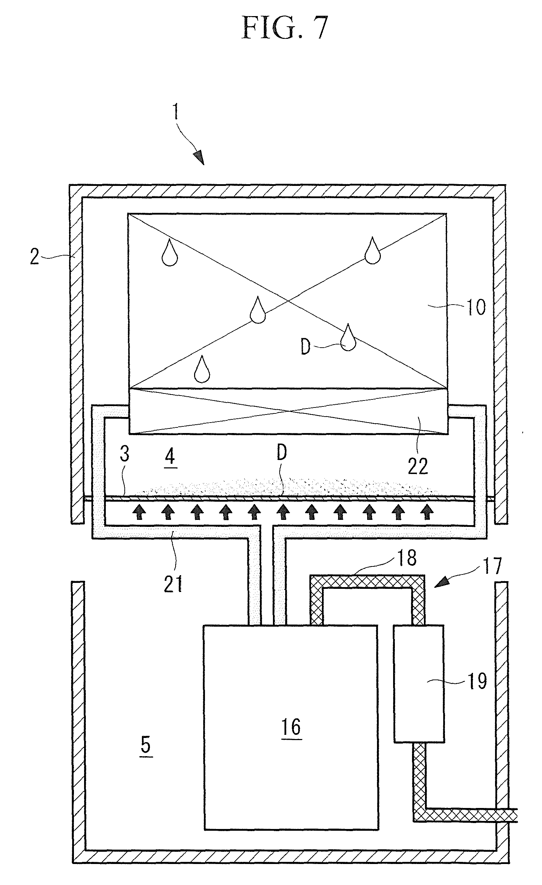

{Fig. 1} Fig. 1 is a schematic sectional view illustrating a device placement configuration of a sub-engine type transportation refrigeration unit according to a first embodiment of the present invention.
{Fig. 2} Fig. 2 is a schematic diagram illustrating the device placement configuration of the above sub-engine type transportation refrigeration unit.
{Fig. 3} Fig. 3 is a schematic diagram illustrating a device placement configuration of a sub-engine type transportation refrigeration unit according to a second embodiment of the present invention.
{Fig. 4} Fig. 4 is a schematic diagram illustrating a device placement configuration of a sub-engine type transportation refrigeration unit according to a third embodiment of the present invention.
{Fig. 5} Fig. 5 is a schematic diagram illustrating the device placement configuration of a modification of the above sub-engine type transportation refrigeration unit.
{Fig. 6} Fig. 6 is a schematic diagram illustrating a device placement configuration of a sub-engine type transportation refrigeration unit according to a fourth embodiment of the present invention.
{Fig. 7} Fig. 7 is a schematic diagram illustrating a device placement configuration of a sub-engine type transportation refrigeration unit according to a fifth embodiment of the present invention.

### {Description of Embodiments}

Hereinafter, embodiments of the present invention will be described with reference to the drawings.

### [First Embodiment]

Hereinafter, a first embodiment of the present invention will be described with reference to Fig. 1 and Fig. 2.

Fig. 1 is a schematic sectional view illustrating a device placement configuration of a sub-engine type transportation refrigeration unit according to the first embodiment of the present invention, and Fig. 2 is a schematic diagram of the device placement configuration.

A sub-engine type refrigeration unit 1 for transportation includes a unit body 2 around which an outer plate panel and the like are covered. The inside of the unit body 2 is partitioned into two upper and lower chambers by a partition plate 3, and the upper chamber is a refrigeration chamber 4, and the lower chamber is an engine chamber 5.

The partition plate 3 that partitions the inside of the unit body 2 into the two upper and lower chambers has an upper surface that serves as a drain pan 6 for receiving drain water which is generated by an outdoor heat exchanger 10 and the like of a heat pump type refrigeration unit 7 described later, and drops from the outdoor heat exchanger 10. The partition plate 3 is configured to discharge the drain water from a specific position to the outside of the unit body 2 through a drain hose and the like.

In the refrigeration chamber 4 located at the upper part, a compressor 8, a passage selector valve (four-way valve) 9, the outdoor heat exchanger 10, an outside fan 11 that allows outside air to pass through the outdoor heat exchanger 10, and the like which are outside constituent devices configuring the heat pump type refrigeration unit 7 are disposed. Additionally, on the back surface side of the refrigeration chamber 4, an inside unit 12 disposed on the inside is integrally provided, and a pressure reducing mechanism (expansion valve, capillary tube) 13, an inside heat exchanger 14, and an inside fan 15 that circulates inside air through the inside heat exchanger 14 that are inside constituent devices configuring the heat pump type refrigeration unit 7 are disposed inside the inside unit 12.

In this embodiment, the inside unit 12 is integrally provided on the back surface of the refrigeration chamber 4 of the unit body 2. However, the inside unit 12 may be configured to be independently disposed in the chamber as a separate body. Alternatively, the passage selector valve (four-way valve) 9 may be configured by a plurality of solenoid valves in place of the four-way valve. Furthermore, although the compressor 8 is configured by a motor compressor, and the motor compressor is disposed in the refrigeration chamber 4, the compressor 8 is configured by an open type compressor, and the open type compressor may be disposed on the engine chamber 5 side so as to be directly connected to the sub engine 16 to be driven by the sub engine 16.

On the other hand, the sub engine 16 for exclusive use for driving the heat pump type refrigeration unit 7 is disposed in the engine chamber 5 located at the lower part, the heat pump type refrigeration unit 7 is configured to be driven by using electric power generated by a generator (not illustrated) driven by the sub engine 16. The sub engine 16 is, for example, a water cooled diesel engine, and includes auxiliary machines such as an exhaust gas system 17 and a cooling water system 20 that discharge combustion exhaust heat of the engine, in addition to known auxiliary machines such as an air intake system and an oil feeding system (the above are not illustrated).

In this embodiment, an exhaust gas pipe 18 configuring the exhaust gas system 17 in the above auxiliary machines extends in the refrigeration chamber 4, and a muffler 19 is disposed above an upper end of the exhaust gas pipe 18, so that exhaust gas is exhausted from the upper surface of the unit body 2 to the outside. Additionally, a cooling water pipe 21, a radiator 22, and a fan 23 for a radiator configuring the cooling water system 20 are disposed in the engine chamber 5, and the cooling water pipe 21 is disposed along a lower surface of the partition plate 3 configuring the drain pan 6, as illustrated in Fig. 2.

That is, in this embodiment, the constituent devices (the cooling water pipe 21, the radiator 22, and the fan 23) of the cooling water system 20, which radiate heat of cooling water heated to around 90°C by combustion exhaust heat generated by operation of the sub engine 16, and cool the cooling water, are disposed in the engine chamber 5, and the cooling water pipe 21 is disposed along a lower surface of the drain pan 6, so that the drain pan 6 is warmed by the heat radiated from the cooling water pipe 21, and drain water that has dropped on the drain pan 6 can be prevented from refreezing even at a low outside air temperature.

According to this embodiment, the following action effects are exhibited by the configuration described above.

The sub engine 16 is activated, and the compressor 8 is driven by electric power generated by the generator, so that the sub-engine type refrigeration unit 1 for transportation is operated. The heat pump type refrigeration unit 7 is operated in a cooling cycle by the drive of the compressor 8, the outdoor heat exchanger 10 functions as a condenser, and the inside heat exchanger 14 functions as an evaporator, so that it is possible to cool the inside of the chamber where a cargo is loaded. On the other hand, the heat pump type refrigeration unit 7 is operated in a heat pump cycle, the head exchanger 14 functions as the condenser, and the outdoor heat exchanger 10 functions as the evaporator, so that it is possible to warm the inside of the chamber where the cargo is loaded.

When the heat pump type refrigeration unit 7 is operated in the heat pump cycle at the low outside air temperature, and warming operation for the inside of the chamber is performed, frost is formed on a surface of the outdoor heat exchanger 10 that functions as the evaporator, and the heating function is lowered. Therefore, in a case where the frost is formed, the frost formation is detected, operation is switched into defrost operation, and the frost is melted. The defrost operation is operation for switching a refrigerating cycle into the cooling cycle by using the passage selector valve 9, introducing hot gas refrigerant discharged from the compressor 8 into the outdoor heat exchanger 10, and heating the outdoor heat exchanger 10 from the inner side to melt the frost. During the defrost operation, the warming operation is suspended.

The frost melted by performing the defrost operation becomes drain water D to flow downward, and drops on the drain pan 6. The drain water D that has dropped on the drain pan 6 is generally discharged to the outside of the unit through the drain hose with no change. However, the drain water D sometimes refreezes on the drain pan 6 at the low outside air temperature, or sometimes refreezes on a peripheral part where the drain water D has dropped, there is a fear that the discharge of the drain water D becomes difficult, or exerts a harmful effect on the peripheral part.

Therefore, in this embodiment, as illustrated in Fig. 2, the cooling water pipe 21 of the cooling water system 20, which is one of the auxiliary machines for an engine that discharge the combustion exhaust heat of the sub engine 16, is disposed along the lower surface of the drain pan 6 configured by using the partition plate 3, and the drain pan 6 can be warmed by the heat radiated from the cooling water that reaches a temperature of around 90°C during the operation. Consequently, even at the low outside air temperature, drain water D that has dropped on the drain pan 6 from the outdoor heat exchanger 10 or the like can be reliably prevented from refreezing.

Accordingly, it is possible to simply prevent the refreezing of the drain water D during the defrost operation to reliably discharge the drain water D to the outside of the unit just by devising placement of the device of the cooling water system 20 (cooling water pipe 21 herein) being one of the existing engine auxiliary machines provided as the peripheral devices of the sub engine 16, without adding the special antifreezing mechanism, and it is possible to simplify the configuration of the sub-engine type refrigeration unit 1 for transportation employing the heat pump system, and reduce the cost of the sub-engine type refrigeration unit 1 for transportation.

Although the cooling water pipe 21 of the cooling water system 20 is disposed along the lower surface of the drain pan 6, in the above embodiment, a part of or all of the radiator 22 may be disposed along the lower surface of the drain pan 6. Additionally, the cooling water pipe 21 is not limited to a forward side pipe from the sub engine 16 toward the radiator 22, and a backward side pipe may be disposed.

### [Second Embodiment]

Now, a second embodiment of the present invention is described with reference to Fig. 3.

This embodiment is different from the above first embodiment in that devices such as an exhaust gas pipe 18, a muffler 19, configuring an exhaust gas system 17 that is one of engine auxiliary machines, are disposed in an engine chamber 5. Other points are similar to those of the first embodiment, and therefore description thereof is omitted.

In this embodiment, constituent devices of the exhaust gas system 17 configured by the exhaust gas pipe 18 and a muffler 19 for discharging high-temperature combustion exhaust gas exhausted from a sub engine 16 to the outside of an unit are disposed in the engine chamber 5.

Thus, a cooling water pipe 21 of a cooling water system 20 is disposed along a lower surface of a drain pan 6, and in addition, the exhaust gas pipe 18 and the muffler 19 that are the constituent devices of the exhaust gas system 17 which discharges exhaust gas of the sub engine 16, which reaches a high temperature (350 to 400°C) is disposed in the engine chamber 5, so that the lower surface of the drain pan 6 can be warmed by radiant heat and the like. Accordingly, the lower surface of the drain pan 6 is warmed by devising placement of the constituent devices of the exhaust gas system 17 which is the existing engine auxiliary machine, so that drain water D that has dropped on the drain pan 6 can be reliably prevented from refreezing.

In a case where the exhaust gas pipe 18 and the muffler 19 are disposed in the engine chamber 5, a discharge port of the exhaust gas pipe 18 that discharges exhaust gas to the outside of the unit is desirably disposed at such a position as not to face a sidewalk side when a trailer or a refrigeration vehicle mounted with a refrigeration unit 1 travels on a road, for example, is desirably disposed so as to face an opposite sidewalk side surface or a road surface side, such that exhaust gas does not reach the pedestrian.

### [Third Embodiment]

Now, a third embodiment of the present invention is described with reference to Fig. 4 and Fig. 5.

This embodiment is different from the above first embodiment in that devices such as an exhaust gas pipe 18, a muffler 19, configuring an exhaust gas system 17 that is one of engine auxiliary machines, are disposed in an engine chamber 5, and the exhaust gas pipe 18, the muffler 19, and the like are disposed along a lower surface of a drain pan 6. Other points are similar to those of the first embodiment, and therefore description thereof is omitted.

In this embodiment, in place of the cooling water system 20, the devices such as the exhaust gas pipe 18 and/or the muffler 19, which configure the exhaust gas system 17 being one of the engine auxiliary machines, and are disposed in the engine chamber 5, are disposed along the lower surface of the drain pan 6.

That is, among the exhaust gas pipe 18 and the muffler 19 configuring the exhaust gas system 17, the exhaust gas pipe 18 is disposed along the lower surface of the drain pan 6 as illustrated in Fig. 4, or both the exhaust gas pipe 18 and the muffler 19 are disposed along the lower surface of the drain pan 6 as illustrated in Fig. 5. The exhaust gas pipe 18 and the muffler 19 are heated by exhaust gas that reaches a high temperature of about 350°C to 400°C, and reaches a temperature near the above temperature. Accordingly, even when the exhaust gas pipe 18 and the muffler 19 are disposed separately from the lower surface of the drain pan 6 by about 10 cm, the drain pan 6 can be sufficiently warmed by radiant heat up to a temperature at which refreezing of drain water can be prevented, and therefore the exhaust gas pipe 18 and the muffler 19 may be disposed close to the lower surface of the drain pan 6 within 10 cm from the lower surface of the drain pan 6.

Thus, the devices such as the exhaust gas pipe 18 and/or the muffler 19, which configure the exhaust gas system 17 being one of the engine auxiliary machines, and are disposed in the engine chamber 5, are disposed along the lower surface of the drain pan 6, so that it is possible to simply prevent refreezing of drain water D during defrost operation to reliably discharge the drain water D to the outside of a unit just by devising placement of the devices of the exhaust gas system 17 (the exhaust gas pipe 18 and/or the muffler 19 herein) being one of the existing engine auxiliary machines provided as peripheral devices of a sub engine 16, without adding a special antifreezing mechanism, and it is possible to simplify the configuration of a sub-engine type refrigeration unit 1 for transportation employing a heat pump system, and reduce the cost of the sub-engine type refrigeration unit 1 for transportation.

Particularly, the exhaust gas pipe 18 and the muffler 19 configuring the exhaust gas system 17 reach a higher temperature than the cooling water system 20, and therefore a warm effect for the drain pan 6 becomes high, and drain water D can be more reliably prevented from refreezing.

### [Fourth Embodiment]

Now, a fourth embodiment of the present invention is described with reference to Fig. 6.

This embodiment is different from the above first embodiment in that constituent devices configuring an exhaust gas system 17 being an engine auxiliary machine (an exhaust gas pipe 18 and a muffler 19), and constituent devices configuring a cooling water system 20 (a cooling water pipe 21 and a radiator 22) are disposed in an engine chamber 5, and both are disposed along a lower surface of a drain pan 6. Other points are similar to those of the first embodiment, and therefore description thereof is omitted.

In this embodiment, the devices such as the exhaust gas pipe 18 and the muffler 19 configuring the exhaust gas system 17 being the engine auxiliary machine, and the devices such as the cooling water pipe 21 and the radiator 22 configuring the cooling water system 20 are disposed in the engine chamber 5, and both the exhaust gas pipe 18 and the cooling water pipe 21 are disposed along the lower surface of the drain pan 6.

Thus, the exhaust gas pipe 18 being the constituent device of the exhaust gas system 17 of the engine auxiliary machine, and the cooling water pipe 21 being the constituent device of the cooling water system 20, which are disposed in the engine chamber 5, are disposed along the lower surface of the drain pan 6, so that both the exhaust gas pipe 18 and the cooling water pipe 21 can warm the lower surface of the drain pan 6. Accordingly, according to this embodiment, it is possible to simply warm the drain pan to prevent refreezing of drain water D which has dropped on the drain pan 6 during defrost operation, just by utilizing the existing constituent device of the exhaust gas system 17 and the existing constituent device of the cooling water system 20, which are the auxiliary machine of the sub engine 16, and just by devising placement of the above constituent devices.

### [Fifth Embodiment]

Now, a fifth embodiment of the present invention is described with reference to Fig. 7.

This embodiment is different from each of the above embodiments in that a cooling water pipe 21 configuring a cooling water system 20 being one of engine auxiliary machines is disposed along a lower surface of a drain pan 6, and a radiator 22 is disposed on a refrigeration chamber 4 side. Other points are similar to those of the first to fourth embodiments, and therefore description thereof is omitted.

In this embodiment, as illustrated in Fig. 7, the cooling water pipe 21 configuring the cooling water system 20 being the engine auxiliary machine is disposed along the lower surface of the drain pan 6 in an engine chamber 5, and the radiator 22 connected to the cooling water pipe 21 is disposed below an outdoor heat exchanger 10 on the refrigeration chamber 4 side.

Thus, the cooling water pipe 21 configuring the cooling water system 20 is disposed along the lower surface of the drain pan 6 in the engine chamber 5, and the radiator 22 is disposed on the refrigeration chamber 4 side, so that it is possible to obtain action effects similar to those of the first and second embodiments by heat radiated from the cooling water pipe 21. An exhaust gas pipe 18 and a muffler 19 that are constituent devices of an exhaust gas system 17 may be disposed in the engine chamber 5 as illustrated in the figure, or may be disposed as illustrated in Fig. 1.

The radiator 22 is disposed on the refrigeration chamber 4 side, so that it is possible to absorb heat radiated from radiator 22 to perform warming operation during heat pump warming operation. Consequently, it is possible to suppress capacity deterioration at a low outside air temperature, and it is possible to suppress frost formation on the outdoor heat exchanger 10 to efficiently perform warming operation.

Furthermore, the radiator 22 is disposed on the refrigeration chamber 4 side, so that the fan 23 for a radiator does not need to be provided in the engine chamber 5 to allow outside air to pass through the radiator 22. Consequently, it is possible to eliminate an outside air vent of the radiator provided on the engine chamber 5 side. Therefore, a ventilation opening is merely provided on the engine chamber 5 side, and a sealing degree is further enhanced, so that it is possible to reduce leakage of engine noise to the outside to attain reduction in noise.

The present invention is not limited to the invention according to the above embodiments, and changes and modifications may be optionally made without departing from the scope of the present invention. For example, although the constituent device of the exhaust gas system 17 and/or the constituent device of the cooling water system 20 are disposed along the lower surface of the drain pan 6 in the above embodiments, these devices may be disposed in contact with the lower surface of the drain pan 6, or may be disposed close to the lower surface of the drain pan 6 within 10 cm.

### {Reference Signs List}

1 sub-engine type transportation refrigeration unit
2 unit body
3 partition plate
4 refrigeration chamber
5 engine chamber
6 drain pan
7 heat pump type refrigeration unit
10 outdoor heat exchanger
16 sub engine
17 exhaust gas system (engine auxiliary machine)
18 exhaust gas pipe (exhaust gas system constituent device)
19 muffler (exhaust gas system constituent device)
20 cooling water system (engine auxiliary machine)
21 cooling water pipe (cooling water system constituent device)
22 radiator (cooling water system constituent device)

## Claims

1. A sub-engine type transportation refrigeration unit comprising:
a unit body that is partitioned into a refrigeration chamber located at an upper part and an engine chamber located at a lower part by a partition plate;
a sub engine for drive of a heat pump type refrigeration unit, disposed in the engine chamber; and
an outside constituent device of the heat pump type refrigeration unit disposed in the refrigeration chamber,
wherein
a drain pan that receives drain water which drops from an outdoor heat exchanger of the heat pump type refrigeration unit is configured by using the partition plate, and
an engine auxiliary machine that discharges combustion exhaust heat of the sub engine is disposed along a lower surface of the drain pan.

2. The sub-engine type transportation refrigeration unit according to claim 1, wherein
the engine auxiliary machine is one of a cooling water system constituent device and an exhaust gas system constituent device of the sub engine, or both the cooling water system constituent device and the exhaust gas system constituent device.

3. The sub-engine type transportation refrigeration unit according to claim 2, wherein
the cooling water system constituent device has a cooling water pipe and/or a radiator.

4. The sub-engine type transportation refrigeration unit according to claim 2 or claim 3, wherein
the cooling water system constituent device disposed along the lower surface of the drain pan has a cooling water pipe, and a radiator connected to the cooling water pipe is disposed on a side of the refrigeration chamber together with the outdoor heat exchanger.

5. The sub-engine type transportation refrigeration unit according to any of claims 2 to 4, wherein
the exhaust gas system constituent device has an exhaust gas pipe and/or a muffler.

6. The sub-engine type transportation refrigeration unit according to any of claims 1 to 5, wherein
the engine auxiliary machine is disposed close to the lower surface of the drain pan within 10 cm.
